# EUROPEAN PATENT SPECIFICATION

(11) **EP 0 920 914 B1**
(45) Date of publication and mention of the grant of the patent: **02.03.2005**
(21) Application number: 98811088.8
(22) Date of filing: 30.10.1998
(51) Int. Cl.: B01L 3/14

(54) **Sample processing system and method**
System zur Behandlung von Proben
Système de manipulation d'échantillons

(30) Priority: 02.12.1997 EP 97121117
(43) Date of publication of application: 09.06.1999
(73) Proprietor: F. HOFFMANN-LA ROCHE AG, 4070 Basel (CH)
(72) Inventor: Fassbind, Walter, 6340 Baar (CH); Japichino, Emanuele, 5643 Sins (CH); Rey, Werner, 6040 Ebikon (CH)
(74) Representative: Ventocilla, Abraham

(56) References cited:
- EP-A- 0 738 986
- WO-A-96/07479
- FR-A- 2 107 510
- FR-A- 2 135 854
- US-A- 5 663 545
- PATENT ABSTRACTS OF JAPAN vol. 017, no. 170 (P-1515), 31 March 1993 & JP 04 329360 A (SHIMADZU CORP), 18 November 1992

## Description

The invention concerns an automatic sample processing system.

The invention further concerns a method for sample identification in an automatic sample processing system.

The invention concerns in particular such a system and method for the processing of samples in an automatic system for processing cell material samples in order to isolate therefrom nucleic acids contained in that sample.

Reliable sample identification is indispensable in automatic sample processing systems and has to be ensured at a plurality of stages of the sample processing, from a sample collection step, at which a sample taken from a patient is introduced into a primary sample tube, followed by splitting of that primary sample in a number portions which are each transferred to respective sample vessels which enter an automatic sample processing system as input sample vessels, up to delivery of processed samples derived from said primary sample in output sample vessels.

U.S. Patent Specification No. 3,680,967 describes a method for sample identification in an automatic sample processing system. According to this method a sample vessel having no identification on it and a sample vessel carrier having a chamber adapted for receiving the sample vessel are used.

The attempt to ensure the reliability of sample identification by carefully labeling each sample vessel properly at every processing step requires a considerable amount of labor and material, in particular in processes with a plurality of processing steps and with a diversity of the processes performed. Moreover a considerable amount of manual handling increases the probability of error and is therefor in itself an obstacle which makes it difficult to reach the aim of reliable sample identification.

A main aim of the invention is therefore to provide a system and a method of the above mentioned types which makes it possible to attain a highly reliable sample identification with a reduced amount of handling and material required.

According to a first aspect of the invention this aim is obtained with a method for sample identification defined by claim 1.

According to a second aspect of the invention the above indicated aim is obtained with a method for sample identification defined by claim 2.
According to a third aspect of the invention the above indicated aim is obtained with an automatic sample processing system defined by claim 4.

The main advantage of a system and a method invention is that a highly reliable sample identification is obtained with a minimum of handling and material requirements.

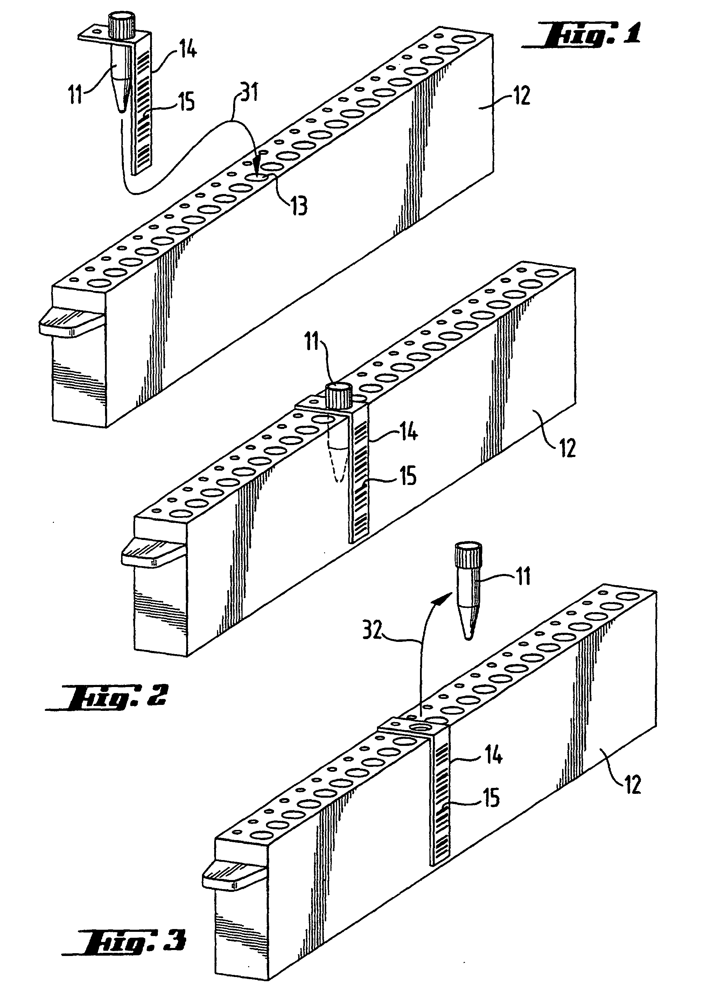

Exemplified embodiments of the invention are described below with reference to the accompanying drawings wherein Figures 1 to 4 show schematic perspective views of components of a system according to the invention and illustrate method steps carried out with those components.

### Example 1

As shown by Fig. 1 a first embodiment of an automatic sample processing system according to the invention comprises a sample vessel 11 having no identification on it, a sample vessel carrier 12 having a chamber 13 apt to receive sample vessel 11, and a sample identification component 14. Sample identification component 14 carries on it a readable identification 15 of a sample contained in or to be pipetted into sample vessel 11. Sample identification component 14 is configured and dimensioned to be removably attachable to sample vessel 11 and also to sample vessel carrier 12 at a position thereof which corresponds to the position of the chamber 13 which receives sample vessel 11. Sample identification component 14 is further so configured and dimensioned that it is apt to remain attached to sample vessel carrier 12 when sample vessel 11 is removed from sample vessel carrier 12.

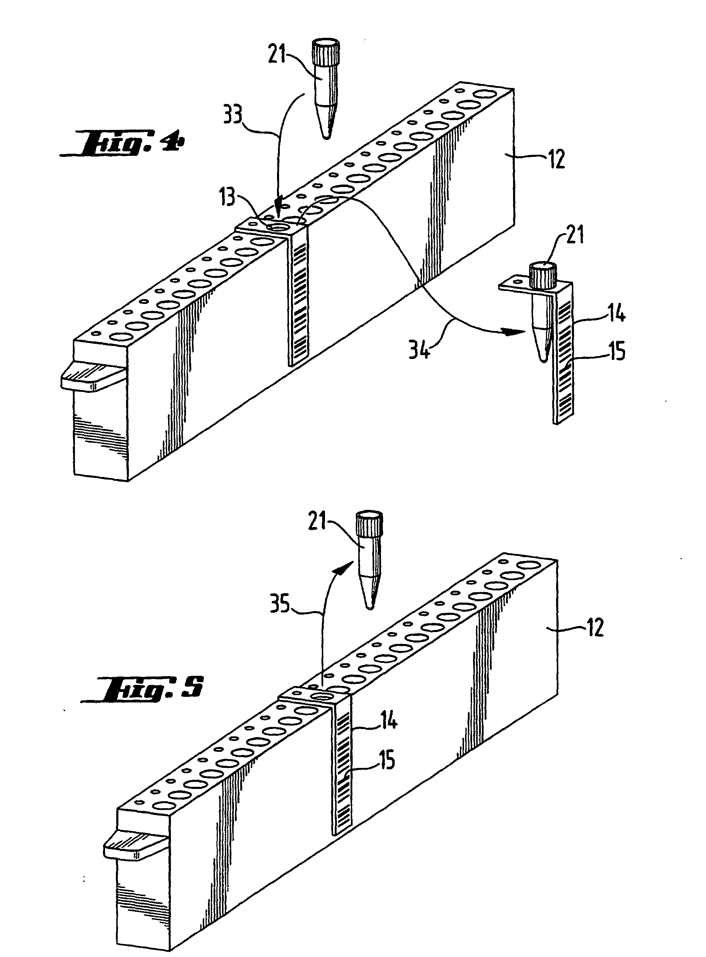

A method according to the invention carried out with the first embodiment just described comprises the following steps illustrated by Figures 1 to 3:
(1) attaching removable sample identification component 14 to sample vessel 11 as shown by Fig. 1, before positioning it in chamber 13 of sample vessel carrier 12 ,
(2) positioning sample vessel 11 in chamber 13 of the sample vessel carrier 12 as shown by Figures 1 and 2 (in Fig. 1 arrow 31 represents the path followed by sample vessel 11 when it is moved towards chamber 13) and thereby attaching removable sample identification component 14 also to sample vessel carrier 12 at a position thereof which corresponds to the position of chamber 13 which receives sample vessel 11 (as shown by Fig. 2), and
(3) transporting sample vessel 11 as shown by Fig. 3 (in Fig. 3 arrow 32 represents the path followed by sample vessel 11 when it is moved away from chamber 13) without sample identification component 14 attached to it from its position on the sample vessel carrier 12 to a sample vessel processing position (not shown in the figures) located outside of the latter carrier , sample identification component 14 remaining attached to sample vessel carrier 12.

### Example 2

As shown by Figures 1 to 4 a second embodiment of an automatic sample processing system according to the invention comprises a first sample vessel 11 and a second sample vessel 21 which have no identification on them, a sample vessel carrier 12 having a chamber 13 apt to receive alternatively either first sample vessel 11 or second sample vessel 21, and a sample identification component 14. Sample identification component 14 carries on it a readable identification 15 of a sample contained in or to be pipetted into the first sample vessel 11 and of a sample contained in or to be pipetted into second sample vessel 21. The sample contained in or to be pipetted into the second sample vessel 21 is obtained by processing a portion of the sample contained in the first sample vessel 11. Sample identification component 14 is configured and dimensioned to be removably attachable to first sample vessel 11, to second sample vessel 21, and also to sample vessel carrier 12 at a. position thereof which corresponds to the position of the chamber 13 which receives a sample vessel. Sample identification component 14 is further so configured and dimensioned that it is apt to remain attached to sample vessel carrier 12 when first sample vessel 11 or second sample vessel 21 is removed from sample vessel carrier 12.

A method according to the invention carried out with the second embodiment just described comprises the following steps illustrated by Figures 1 to 4:
(1) attaching removable sample identification component 14 to first sample vessel 11 as shown by Fig. 1, before positioning it on sample vessel carrier 12,
(2) positioning first sample vessel 11 in chamber 13 of sample vessel carrier 12 as shown by Figures 1 and 2 (in Fig. 1 arrow 31 represents the path followed by sample vessel 11 when it is moved towards chamber 13) and thereby removably attaching its sample identification component 14 also to sample vessel carrier 12 at a position thereof which corresponds to the position of chamber 13 which receives first sample vessel 11 (as shown by Fig. 2,
(3) transporting first sample vessel 11 as shown by Fig. 3 (in Fig. 3 arrow 32 represents the path followed by sample vessel 11 when it is moved away from chamber 13) without sample identification component 14 attached to it from its position on sample vessel carrier 12 to a first sample vessel processing position (not shown in the figures) located outside of carrier 12 , sample identification component 14 remaining attached to sample vessel carrier 12,
(4) processing the sample contained in the first sample vessel 11 in a sample processing device (not shown in the figures) located outside of sample vessel carrier 12 to obtain a processed sample therefrom,
(5) transferring the processed sample from the sample processing device where said processed sample is obtained to a second sample vessel 21 positioned at a second sample vessel processing position (not shown in the figures) located outside of the sample vessel carrier 12, and
(6) transporting second sample vessel 21 as shown by Fig. 4 (in Fig. 4 arrow 33 represents the path followed by sample vessel 11 when it is moved towards chamber 13) from the second sample vessel processing position to the position formerly occupied by first sample vessel 11 on the sample vessel carrier 12, the processed sample contained in second sample vessel 21 being thereby identified by sample identification component 14 located at the latter position on the sample vessel carrier 12.

In a preferred embodiment of the method just described one and the same sample vessel processing position is used as first sample vessel processing position and also as second sample vessel processing position.

After step (6) of the method described above, second sample vessel 21 containing the processed sample can be handled further in one of the following ways, either according to (7.1) or to (7.2) described hereinafter with reference to Figures 4 and 5:
(7.1) Second sample vessel 21 with sample identification component 14 attached to it is transported as shown by Fig. 4 (in Fig. 4 arrow 34 represents the path followed by second sample vessel 21 when it is moved away from chamber 13) from its position on sample vessel carrier 12 to a further processing station (not shown in the figures) located outside of carrier 12. Such a processing station can be e.g. an automatic analyzer including means for identifying the sample carried by sample vessel 21 by machine reading of the identification 15 carried by sample identification component 14 attached to sample vessel 21.
(7.2) Second sample vessel 21 without sample identification component 14 attached to it is transported as shown by Fig. 5 (in Fig. 5 arrow 35 represents the path followed by second sample vessel 21 when it is moved away from chamber 13) from its position on sample vessel carrier 12 to a further processing station located outside of carrier 12. Such a processing station can be e.g. an automatic analyzer where sample vessel 21 is automatically positioned at a predetermined position assigned to sample vessel 21 on the basis of information obtained e.g. by machine reading of the identification 15 carried by sample identification component 14 attached to sample vessel 21 and transmission of that information to the analyzer.

### Example 3

As described hereinafter with reference to Figures 1 to 3, a third embodiment of an automatic sample processing system according to the invention comprises a sample vessel carrier 12 having a plurality of chambers 13, a plurality of sample vessels 11 having no identification on them (for simplicity only one of such vessels is represented in Figures 1-3), each of the chambers 13 of sample vessel carrier 12 being apt to receive one of the sample vessels 11, and a plurality of sample identification components 14. Each of sample identification components 14 carries on it a readable identification 15 of a sample contained in or to be pipetted into one of sample vessels 11. Each of sample identification components 14 is configured and dimensioned to be removably attachable to one of sample vessels 11 and also to sample vessel carrier 12 at a position thereof which corresponds to the position of the chamber 13 which receives sample vessel. Each of sample identification components 14 is further so configured and dimensioned that it is apt to remain attached to sample carrier 12 when the corresponding sample vessel is removed from sample vessel carrier 12.

A method according to the invention carried out with the third embodiment just described comprises the following steps described hereinafter with reference to Figures 1 to 3:
(1) attaching a removable sample identification component 14 to each of sample vessels 11 as shown by Fig. 1, before positioning it on sample vessel carrier 12,
(2) positioning each of sample vessels 11 in one of chambers 13 of the sample vessel carrier 12 as shown by Figures 1 and 2 and thereby removably attaching its respective sample identification component 14 also to sample vessel carrier 12 at a position thereof which corresponds to the position of the chamber 13 which receives the corresponding sample vessel as shown by Fig. 2, and
(3) transporting each of sample vessels 11 as shown by Fig. 3 without sample identification component 14 attached to it from its position on the sample vessel carrier 12 to a sample vessel processing position (not shown in the figures) located outside of the latter carrier 12, the sample identification components 14 of the transported vessels 11 remaining attached to sample vessel carrier 12.

### Example 4

As described hereinafter with reference to Figures 1 to 3, a fourth embodiment of an automatic sample processing system according to the invention comprises a plurality of first sample vessels 11 and a plurality of second sample vessels 21, which first and second sample vessels have no identification on them, a sample vessel carrier 12 having a plurality of chambers 13, each chamber 13 being apt to receive alternatively either one first sample vessels 11 or one of second sample vessels 21, and a plurality of sample identification components 14, each of which carries on it a readable identification 15 of a sample contained in or to be pipetted into one of first sample vessels 11 or one of second sample vessels 21. Each sample contained or to be pipetted into one of second vessels 21 is obtained by processing a portion of the sample contained in a corresponding first sample vessel 11. Each sample identification component 14 is configured and dimensioned to be removably attachable to one of first sample vessels 11, to one of second sample vessels 21, and also to sample vessel carrier 12 at a position thereof which corresponds to the position of the chamber 13 which receives a first sample vessel 11 or a second sample vessel 21. Each sample identification component 14 is further so configured and dimensioned that it is apt to remain attached to sample carrier 12 when the corresponding sample vessel is removed from sample vessel carrier 12.

A method according to the invention carried out with the fourth embodiment just described comprises the following steps described hereinafter with reference to Figures 1 to 4:
(1) attaching a removable sample identification component 14 to each of first sample vessels 11 as shown by Fig. 1, before positioning it on sample vessel carrier 12,
(2) positioning each of first sample vessels 11 in one of chambers 13 of sample vessel carrier 12 as shown by Figures 1 and 2 and thereby removably attaching its sample identification component 14 also to sample vessel carrier 12 at a position thereof which corresponds to the position of the chamber 13 which receives the corresponding first sample vessel,
(3) transporting each of first sample vessels 11 as shown by Fig. 3 without sample identification component 14 attached to it from its position on sample vessel carrier 12 to a first sample vessel processing position located outside of the latter carrier 12, the sample identification component 14 of the transported sample vessel remaining attached to sample vessel carrier 12,
(4) processing the sample contained in each of the transported first sample vessels 11 in a sample processing device to obtain a processed sample therefrom,
(5) transferring each of processed samples from sample processing device to a second sample vessel 21 positioned at a second sample vessel processing position located outside of the sample vessel carrier 12, and
(6) transporting each of second sample vessels 21 as shown by Fig. 4 from second sample vessel processing position to the position formerly occupied by the corresponding first sample vessel 11 on sample vessel carrier 12, the sample contained in each of second sample vessels 21 being thereby identified by the sample identification component 14 located at the latter position on the sample vessel carrier 12.

In a preferred embodiment of the method just described one and the same sample vessel processing position is used as first sample vessel processing position and also as second sample vessel processing position.

After step (6) of the method described above, each of the second sample vessels 21 containing the processed sample can be handled further in one of the following ways, either according to (7.1a) or to (7.2a) described hereinafter with reference to Figures 4 and 5:
(7.1a) Each of the second sample vessels 21 with sample identification component 14 attached to it is transported as shown by Fig. 4 (in Fig. 4 arrow 34 represents the path followed by second sample vessel 21 when it is moved away from chamber 13) from its position on sample vessel carrier 12 to a further processing station (not shown in the figures) located outside of carrier 12. Such a processing station can be e.g. an automatic analyzer including means for identifying the sample carried by sample vessel 21 by machine reading of the identification 15 carried by sample identification component 14 attached to sample vessel 21.
(7.2a) Each of the second sample vessels 21 without sample identification component 14 attached to it is transported as shown by Fig. 5 (in Fig. 5 arrow 35 represents the path followed by second sample vessel 21 when it is moved away from chamber 13) from its position on sample vessel carrier 12 to a further processing station located outside of carrier 12. Such a processing station can be e.g. an automatic analyzer where sample vessel 21 is automatically positioned at a predetermined position assigned to sample vessel 21 on the basis of information obtained e.g. by machine reading of the identification 15 carried by sample identification component 14 attached to sample vessel 21 and transmission of that information to the analyzer.

In all examples described above the sample vessels 11 and 21, the sample vessel carrier 12 and the sample identification component 14 are preferably made of suitable plastic materials. The readable identification 15 on sample identification component 14 is preferably a barcode label.

## Claims

1. A method for sample identification in an automatic sample processing system including
a) providing a sample vessel (11) having no identification on it,
b) providing a sample vessel carrier (12) having a chamber (13) adapted for receiving said sample vessel,
**characterized in that** it further comprises:
c) removably attaching a sample identification component (14) to said sample vessel, before positioning it on said sample vessel carrier (12), said sample identification component (14) carrying on it a readable identification (15) of a sample contained in or to be pipetted into said sample vessel,
d) positioning said sample vessel (11) in said chamber (13) of the sample vessel carrier (12) and thereby removably attaching its sample identification component (14) also to said sample vessel carrier (12) at a position thereof which corresponds to the position of said chamber (13) which receives the sample vessel, and
e) transporting said sample vessel (11) without said sample identification component (14) attached to it from its position on the sample vessel carrier (12) to a sample vessel processing position located outside of said sample vessel carrier, said sample identification component (14) remaining attached to said sample vessel carrier (12).

2. A method for sample identification in an automatic sample processing system **characterized in that** it comprises:
a) providing a first sample vessel (11) and a second sample vessel (21), said first and second sample vessels having no identification on them,
b) providing a sample vessel carrier (12) having a chamber (13) being adapted for receiving alternatively either said first sample vessel (11) or said second sample vessel (21),
c) removably attaching a sample identification component (14) to said first sample vessel (11), before positioning it on said sample vessel carrier (12), said sample identification component (14) carrying on it a readable identification (15) of a sample contained in or to be pipetted into said first sample vessel(11),
d) positioning said first sample vessel (11) in said chamber (13) of said sample vessel carrier (12) and thereby removably attaching its sample identification component (14) also to said sample vessel carrier (12) at a position thereof which corresponds to the position of said chamber (13) which receives said first sample vessel,
e) transporting said first sample vessel (11) without sample identification component (14) attached to it from its position on said sample vessel carrier (12) to a first sample vessel processing position located outside of said sample vessel carrier, said sample identification component (14) remaining attached to said sample vessel carrier (12),
f) processing the sample contained in the first sample vessel (11) in a sample processing device to obtain a processed sample therefrom,
g) transferring said processed sample from said sample processing device to a second sample vessel (21) positioned at a second sample vessel processing position located outside of the sample vessel carrier (12), and
h) transporting said second sample vessel (21) from said second sample vessel processing position to the position formerly occupied by said first sample vessel (11) on the sample vessel carrier (12), the processed sample contained in said second sample vessel (21) being thereby identified by said sample identification component (14) located at the latter position on the sample vessel carrier (12).

3. A method according to claim 2, **characterized in that** a single sample vessel processing position is used as first sample vessel processing position and also as second sample vessel processing position.

4. An automatic sample processing system **characterized in that** it comprises:
a) a first sample vessel (11) and a second sample vessel (21), said first and second sample vessels having no identification on them,
b) a sample vessel carrier (12) having a chamber (13) adapted for receiving alternatively either said first sample vessel (11) or said second sample vessel (21), and
c) a sample identification component (14), which carries on it a readable identification (15) of a sample contained in or to be pipetted into the first sample vessel (11) and of a sample contained in or to be pipetted into said second sample vessel (21), said sample contained in or to be pipetted into the second sample vessel (21) being obtained by processing a portion of the sample contained in the first sample vessel (11), and said sample identification component (14) being removably attachable to said first sample vessel (11), to said second sample vessel (21), and also to said sample vessel carrier (12) at a position thereof which corresponds to the position of the chamber (13) which receives a sample vessel, said sample identification component (14) being adapted for remaining attached to said sample vessel carrier (12) when said first sample vessel (11) or said second sample vessel (21) is removed from said sample vessel carrier (12).

## Patentansprüche

1. Verfahren zum Identifizieren von Proben in einem automatischen Probenverarbeitungssystem, umfassend
a) Bereitstellen eines Probengefäßes (11), das keine Identifizierung auf sich trägt,
b) Bereitstellen eines Probengefäßträgers (12), der eine Kammer (13) hat, die zum Aufnehmen des Probengefäßes ausgebildet ist,
**dadurch gekennzeichnet, daß** es ferner umfaßt:
c) Befestigen eines abnehmbaren Probenidentifikationselements (14) an dem Probengefäß, bevor es an dem Probengefäßträger (12) positioniert wird, wobei das Probenidentifikationselement (14) eine lesbare Identifikation (15) einer in dem Probengefäß enthaltenen oder in das Probengefäß zu pipettierenden Probe auf sich trägt,
d) Positionieren des Probengefäßes (11) in der Kammer (13) des Probengefäßträgers (12), wobei sein Probenidentifikationselement (14) auch an einer Position des Probengefäßträgers (12), die der Position der Kammer (13) entspricht, die das Probengefäß aufnimmt, abnehmbar an dem Probengefäßträger befestigt wird, und
e) Transportieren des Probengefäßes (11) von seiner Position an dem Probengefäßträger (12) zu einer Probengefäßverarbeitungsposition, die außerhalb des Probengefäßträgers angeordnet ist, ohne daß das Probenidentifikationselement (14) an dem Probengefäß (11) befestigt ist, wobei das Probenidentifikationselement (14) an dem Probengefäßträger (12) befestigt bleibt.

2. Verfahren zum Identifizieren von Proben in einem automatischen Probenverarbeitungssystem, **dadurch gekennzeichnet, daß** es umfaßt:
a) Bereitstellen eines ersten Probengefäßes (11) und eines zweiten Probengefäßes (21), wobei das erste und zweite Probengefäß keine Identifizierung auf sich tragen,
b) Bereitstellen eines Probengefäßträgers (12), der eine Kammer (13) hat, die zum alternativen Aufnehmen entweder des ersten Probengefäßes (11) oder des zweiten Probengefäßes (21) ausgebildet ist,
c) Befestigen eines abnehmbaren Probenidentifikationselements (14) an dem ersten Probengefäß (11), bevor es an dem Probengefäßträger (12) positioniert wird, wobei das Probenidentifikationselement (14) eine lesbare Identifikation (15) einer in dem erstem Probengefäß (11) enthaltenen oder in das erste Probengefäß (11) zu pipettierenden Probe trägt,
d) Positionieren des ersten Probengefäßes (11) in der Kammer (13) des Probengefäßträgers (12), wobei auch sein Probenidentifikationselement (14) an einer Position des Probengefäßträgers (12), die der Position der Kammer (13) entspricht, die das erste Probengefäß aufnimmt, abnehmbar an dem Probengefäßträger befestigt wird,
e) Transportieren des ersten Probengefäßes (11) von seiner Position an dem Probengefäßträger (12) zu einer ersten Probengefäßverarbeitungsposition, die außerhalb des Probengefäßträgers angeordnet ist, ohne daß das Probenidentifikationselement (14) an dem Probengefäß (11) befestigt ist, wobei das Probenidentifikationselement (14) an dem Probengefäßträger (12) befestigt bleibt,
f) Verarbeiten der in dem ersten Probengefäß (11) enthaltenen Probe in einer Probenverarbeitungsvorrichtung, um eine verarbeitete Probe daraus zu erhalten,
g) Weitertransportieren der verarbeiteten Probe von der Probenverarbeitungsvorrichtung zu einem zweiten Probengefäß (21), das an einer zweiten Probenverarbeitungsposition angeordnet ist, die sich außerhalb des Probengefäßträgers (12) befindet, und
h) Transportieren des zweiten Probengefäßes (21) von der zweiten Probengefäßverarbeitungsposition zu der Position, an der sich zuvor das erste Probengefäß (11) an dem Probengefäßträger (12) befand, wobei die in dem zweiten Probengefäß (21) enthaltene verarbeitete Probe durch das Probenidentifikationselement (14) identifiziert wird, das sich an der letztgenannten Position des Probengefäßträgers (12) befindet.

3. Verfahren nach Anspruch 2, **dadurch gekennzeichnet, daß** eine einzelne Probengefäßverarbeitungsposition als erste Probengefäßverarbeitungsposition und auch als zweite Probengefäßverarbeitungsposition verwendet wird.

4. Automatisches Probenverarbeitungssystem, **dadurch gekennzeichnet, daß** es umfaßt:
a) ein ersten Probengefäß (11) und ein zweites Probengefäß (21), wobei das erste und zweite Probengefäß keine Identifikation auf sich tragen,
b) einen Probengefäßträger (12), der eine Kammer (13) hat, die zum alternativen Aufnehmen entweder des ersten Probengefäßes (11) oder des zweiten Probengefäßes (21) ausgebildet ist, und
c) ein Probenidentifikationselement (14), das auf sich eine lesbare Identifikation (15) einer in dem ersten Probengefäß (11) enthaltenen oder in das erste Probengefäß (11) zu pipettierenden Probe und einer in dem zweiten Probengefäß (21) enthaltenen oder in das zweite Probengefäß (21) zu pipettierenden Probe trägt, wobei die in dem zweiten Probengefäß enthaltene oder in das zweite Probengefäß zu pipettierende Probe durch Verarbeiten eines Teils der in dem ersten Probengefäß (11) enthaltenen Probe gewonnen worden ist, und wobei das Probenidentifikationselement (14) abnehmbar an dem ersten Probengefäß (11), an dem zweiten Probengefäß (21) und auch an dem Probengefäßträger (12) an einer Position des Probengefäßträgers, die der Position der Kammer (13) entspricht, die das Probengefäß aufnimmt, befestigbar ist, wobei das Probenidentifikationselement (14) derart ausgebildet ist, daß es an dem Probengefäßträger (12) befestigt bleiben kann, wenn das erste Probengefäß (11) oder das zweite Probengefäß (21) aus dem Probengefäßträger (12) entnommen wird.

## Revendications

1. Procédé d'identification d'échantillons dans un système automatique de traitement d'échantillons comprenant
a) la fourniture d'un réceptacle d'échantillons (11) ne présentant aucune identification sur lui,
b) la fourniture d'un support de réceptacle d'échantillons (12) possédant une chambre (13) adaptée pour recevoir ledit réceptacle d'échantillons,
**caractérisé en ce qu'**il comprend en outre :
c) la fixation amovible d'un composant d'identification d'échantillons (14) au dit réceptacle d'échantillons, avant le positionnement de celui-ci sur ledit support de réceptacle d'échantillons (12), ledit composant d'identification d'échantillons (14) portant sur lui une identification lisible (15) d'un échantillon contenu dans ledit réceptacle d'échantillons ou destiné à être pipeté à l'intérieur de celui-ci,
d) le positionnement dudit réceptacle d'échantillons (11) dans ladite chambre (13) du support de réceptacle d'échantillons (12) et de ce fait la fixation amovible de son composant d'identification d'échantillons (14) également au dit support de réceptacle d'échantillons (12) en une position de celui-ci qui correspond à la position de ladite chambre (13) qui reçoit le réceptacle d'échantillons, et
e) le transport dudit réceptacle d'échantillons (11), sans que ledit composant d'identification d'échantillons (14) ne soit fixé à celui-ci, depuis sa position sur le support de réceptacle d'échantillons (12) jusqu'à une position de traitement du réceptacle d'échantillons placée à l'extérieur dudit support de réceptacle d'échantillons, ledit composant d'identification d'échantillons (14) restant fixé au dit support de réceptacle d'échantillons (12).

2. Procédé d'identification d'échantillons dans un système de traitement automatique d'échantillons **caractérisé en ce qu'**il comprend :
a) la fourniture d'un premier réceptacle d'échantillons (11) et d'un second réceptacle d'échantillons (21), lesdits premier et second réceptacles d'échantillons ne présentant aucune identification sur eux,
b) la fourniture d'un support de réceptacle d'échantillons (12) possédant une chambre (13) adaptée pour recevoir en alternance soit ledit premier réceptacle d'échantillons (11) soit ledit second réceptacle d'échantillons (21),
c) la fixation amovible d'un composant d'identification d'échantillons (14) au dit premier réceptacle d'échantillons (11), avant le positionnement de celui-ci sur ledit support de réceptacle d'échantillons (12), ledit composant d'identification d'échantillons (14) portant sur lui une identification lisible (15) d'un échantillon contenu dans ledit premier réceptacle d'échantillons (11) ou destiné à être pipeté à l'intérieur de celui-ci,
d) le positionnement dudit premier réceptacle d'échantillons (11) dans ladite chambre (13) dudit support de réceptacle d'échantillons (12) et de ce fait la fixation amovible de son composant d'identification d'échantillons (14) également au dit support de réceptacle d'échantillons (12) en une position de celui-ci qui correspond à la position de ladite chambre (13) qui reçoit ledit premier réceptacle d'échantillons,
e) le transport dudit premier réceptacle d'échantillons (11), sans que le composant d'identification d'échantillons (14) ne soit fixé à celui-ci, depuis sa position sur ledit support de réceptacle d'échantillons (12) jusqu'à une position de traitement de premier réceptacle d'échantillons placée à l'extérieur dudit support de réceptacle d'échantillons, ledit composant d'identification d'échantillons (14) restant fixé au dit support de réceptacle d'échantillons (12),
f) le traitement de l'échantillon contenu dans le premier réceptacle d'échantillons (11) dans un dispositif de traitement d'échantillons pour en obtenir un échantillon traité,
g) le transfert dudit échantillon traité depuis ledit dispositif de traitement d'échantillons jusqu'à un second réceptacle d'échantillons (21) positionné en une position de traitement de second réceptacle d'échantillons placée à l'extérieur du support de réceptacle d'échantillons (12), et
h) le transport dudit second réceptacle d'échantillons (21) depuis ladite position de traitement de second réceptacle d'échantillons jusqu'à la position précédemment occupée par ledit premier réceptacle d'échantillons (11) sur le support de réceptacle d'échantillons (12), l'échantillon traité contenu dans ledit second réceptacle d'échantillons (21) étant de ce fait identifié par ledit composant d'identification d'échantillons (14) placé en cette dernière position sur le support de réceptacle d'échantillons (12).

3. Procédé selon la revendication 2, **caractérisé en ce qu'**une seule position de traitement de réceptacle d'échantillons est utilisée comme position de traitement de premier réceptacle d'échantillons et également comme position de traitement de second réceptacle d'échantillons.

4. Système de traitement automatique d'échantillons **caractérisé en ce qu'**il comprend :
a) un premier réceptacle d'échantillons (11) et un second réceptacle d'échantillons (21), lesdits premier et second réceptacles d'échantillons ne présentant aucune identification sur eux,
b) un support de réceptacle d'échantillons (12) possédant une chambre (13) adaptée pour recevoir en alternance soit ledit premier réceptacle d'échantillons (11) soit ledit second réceptacle d'échantillons (21), et
c) un composant d'identification d'échantillons (14), qui porte sur lui une identification lisible (15) d'un échantillon contenu dans le premier réceptacle d'échantillons (11) ou destiné à être pipeté à l'intérieur de celui-ci et d'un échantillon contenu dans ledit second réceptacle d'échantillons (21) ou destiné à être pipeté à l'intérieur de celui-ci, ledit échantillon contenu dans le second réceptacle d'échantillons (21) ou destiné à être pipeté à l'intérieur de celui-ci étant obtenu en traitant une partie de l'échantillon contenu dans le premier réceptacle d'échantillons (11), et ledit composant d'identification d'échantillons (14) pouvant être fixé de manière amovible au dit premier réceptacle d'échantillons (11), au dit second réceptacle d'échantillons (21), et également au dit support de réceptacle d'échantillons (12) en une position de celui-ci qui correspond à la position de la chambre (13) qui reçoit un réceptacle d'échantillons, ledit composant d'identification d'échantillons (14) étant adapté pour rester fixé au dit support de réceptacle d'échantillons (12) lorsque ledit premier réceptacle d'échantillons (11) ou ledit second réceptacle d'échantillons (21) est retiré dudit support de réceptacle d'échantillons (12).
